# EUROPÄISCHE PATENTANMELDUNG

(11) **EP 2 740 558 A1**
(43) Veröffentlichungstag der Anmeldung: **11.06.2014**
(21) Anmeldenummer: 13198405.6
(22) Anmeldetag: 02.02.2005
(51) Int. Cl.: B23K 9/133, H02K 11/00

(54) **Antriebsmotor zur Schweißdrahtförderung**

(30) Priorität: 04.02.2004 AT 1602004
(62) Teilanmeldung aus: 05700029.1
(71) Anmelder: Fronius International GmbH, 4643 Pettenbach (AT)
(72) Erfinder: Flattinger, Günther, 4061 Pasching (AT); Schörghuber, Manfred, 4600 Wels (AT); Himmelbauer, Karin, 4493 Wolfern (AT)
(74) Vertreter: Sonn & Partner Patentanwälte

(57) **Zusammenfassung**

Die Erfindung betrifft einen Antriebsmotor (33) zur Schweißdrahtförderung, mit Lagern (43, 44), einem Rotor (45), insbesondere einer Motorwelle (46) und einer Rotorwicklung (49) bzw. Rotormagneten, und einem Statorpaket, insbesondere einer Statorwicklung (47) oder Statormagneten, wobei zumindest ein Teil der Motorwelle (46), insbesondere der Aufnahmebereich einer Antriebsrolle (31), von dem Gehäuse, insbesondere einem Statorgehäuse (65) oder einem Grundkörper (37) einer externen Komponente, elektrisch isoliert ist.

## Beschreibung

Die Erfindung betrifft einen Antriebsmotor zur Schweißdrahtförderung, mit Lagern, einem Rotor, insbesondere einer Motorwelle und einer Rotorwicklung bzw. Rotormagneten, und einem Statorpaket, insbesondere einer Statorwicklung oder Statormagneten.

Weiters betrifft die Erfindung eine Antriebseinheit für die Förderung eines Schweißdrahts mit einem solchen Antriebsmotor.

Aus dem Stand der Technik ist bekannt, dass bei den in den Schweißbrennern eingesetzten Antriebsmotoren diese als eigenständige Baugruppen ausgebildet sind. Hierzu weist der Antriebsmotor ein eigenes Statorgehäuse auf, an dem anschließend sämtliche Elemente, wie die Statorwicklungen bzw. Statormagnete, der Rotor mit dem Rotorpaket, insbesondere den Rotorwicklungen bzw. Rotormagneten, die Lager für den Rotor, das Lagerschild und eine Motorplatte, eingebaut und befestigt sind. Diese eigenständige Baugruppe des Antriebsmotors wird am Brennergehäuse befestigt. Damit die Förderkraft verstärkt wird, ist an der Motorwelle ein Getriebe und an dieser eine Antriebsrolle befestigt, sodass mit einer dazugehörige Druckrolle eine Schweißdrahtförderung möglich ist. Nachteilig ist hierbei, dass zusätzlicher bzw. mehr Platz beansprucht wird, da das Statorgehäuse für die Befestigung der Lager besonders stabil ausgeführt werden muss. Ein weiterer Nachteil liegt darin, dass keine optimale Kühlung des Antriebsmotors möglich ist, da die entstehende Rotorwärme vom Statorgehäuse aufgenommen wird und keine optimale Wärmeableitung aufgrund kleiner Kühlflächen oder entsprechender Übergangswiderstände zum Schweißbrenner erfolgt.

Eine andere Ausführungsvariante besteht aus einem freiliegend, luftgekühlten Antriebsmotor. Da hier die Kühlung über das Statorgehäuse erfolgt, ist es von Nachteil, dass nur eine sehr geringe Kühlfläche zur Verfügung steht.

Beispielsweise beschreiben die GB 911 649 A, die US 4 845 336 A, die GB 1 134 664 A, die GB 1 080 125 A sowie die GB 1 093 736 A Konstruktionen von Schweißbrennern mit Antriebsmotoren, welche als eigenständige Baugruppen ausgebildet sind und eigene Statorgehäuse aufweisen.

Die US 3,414,197 A beschreibt einen Schweißbrenner mit einem Antriebsmotor zur Förderung des Schweißdrahts der gegenständlichen Art.Die Aufgabe der Erfindung besteht darin, einen elektrischen Antriebsmotor zu schaffen, bei dem eine elektrische Potentialtrennung zwischen Antriebsrolle und Statorgehäuse und/oder Schweißbrenner gegeben ist.

Die Aufgabe der Erfindung wird dadurch gelöst, dass zumindest ein Teil der Motorwelle, insbesondere der Aufnahmebereich der Antriebsrolle, vom Gehäuse elektrisch isoliert ist. Vorteilhaft ist hierbei, dass ein elektrisches Potential an einem Teilbereich der Motorwelle vom Statorgehäuse oder Grundkörper getrennt wird und somit kein Strom über Bauteile oder die Schnittstellen des Schweißbrenners fließen kann. Ein wesentlicher Vorteil liegt darin, dass keine Trennung des Wärmeflusses von der Wärmequelle, insbesondere der Statorwicklung, zum Kühlkörper, insbesondere des Brennergehäuses erfolgt. Ein Vorteil liegt auch darin, dass beim Einsatz in der Schweißtechnik dadurch die Antriebsrolle direkt an die Motorwelle ohne zusätzlich anzuordnende Isolierung montiert werden kann, was den Fertigungsaufwand und somit die Kosten reduziert. Ein weiterer Vorteil liegt auch darin, dass dadurch die Fertigungstoleranzkette reduziert werden kann, sodass bei einem Einsatz in der Schweißtechnik eine bessere Schweißdrahtförderung erzielt wird. Auch bei einem Einsatz in der Schweißtechnik wird erreicht, dass bei einer Direktmontage der Antriebsrolle auf die Motorwelle mit einer Stahl-Stahlverbindung eine bessere Verbindung der Antriebsrolle an der Motorwelle erzielt wird.

Weitere vorteilhafte Ausbildungen sind in den Ansprüchen 2 bis 9 enthalten. Die sich daraus ergebenden Vorteile können aus der Beschreibung entnommen werden.

Die Aufgabe der Erfindung wird auch durch eine Antriebseinheit gemäß Anspruch 10 gelöst. Die Aufgabe der Erfindung kann auch durch die Ausführung gemäß Anspruch 40 gelöst werden. Dadurch wird in vorteilhafter Weise erreicht, dass ein derartiger Aufbau der Integration des Antriebsmotors in einer Komponente bei anderen Einsatzgebieten als bei einem Schweißbrenner angewandt werden kann, d.h., dass ein derartiger Aufbau nicht nur für einen Schweißbrenner vorteilhaft ist, sondern auch andere Schweißdrahtfördersysteme, wie beispielsweise bei einer Kaltdraht-Schweißdrahtförderung für einen WIG- oder Plasma-Prozess oder einer Schweißdrahtförderung außerhalb des Schweißbrenners, derart aufgebaut werden können.

Die vorliegende Erfindung wird anhand der beigefügten Zeichnungen, welche Ausführungsbeispiele des Schweißbrenners zeigen, noch weiter erläutert. Es zeigen:
Fig. 1 eine schematische Darstellung einer Schweißmaschine bzw. eines Schweißgerätes;
Fig. 2 eine schaubildliche Darstellung eines Schweißbrenners im zusammengebauten Zustand;
Fig. 3 eine schaubildliche Darstellung mit abgenommenem Abdeckteil;
Fig. 4 eine Explosionsdarstellung des Schweißbrenners und des integrierten Antriebsmotors, in vereinfachter, schematischer Darstellung;
Fig. 5 einen Schnitt durch den Schweißbrenner in Seitenansicht und vereinfachter, schematischer Darstellung;
Fig. 6 eine andere Ausführungsform des Schweißbrenners, in vereinfachter, schematischer Darstellung;
Fig. 7 eine weitere Ausführungsform des Schweißbrenners, in vereinfachter, schematischer Darstellung;
Fig. 8 einen anderen Aufbau des Schweißbrenners mit integriertem Antriebsmotor, in vereinfachter, schematischer Darstellung;
Fig. 9 eine Erweiterungsmöglichkeit des Schweißbrenners, in vereinfachter, schematischer Darstellung;
Fig. 10 und Fig. 11 eine Anpassungsmöglichkeit der Leistung oder des Ansprechverhaltens des Antriebsmotors bei einem integrierten Antriebsmotor im Schweißbrenner, in vereinfachter, schematischer Darstellung;
Fig. 12 ein anderes Ausführungsbeispiel für den Aufbau des Schweißbrenners mit integriertem Antriebsmotor;
Fig. 13 eine Ausführungsform eines Handschweißbrenners; und die
Fig. 14 bis 19 ein Ausführungsbeispiel eines Antriebsmotors als eigenständige Baueinheit in unterschiedlichen Ausführungen, in vereinfachter, schematischer Darstellung.

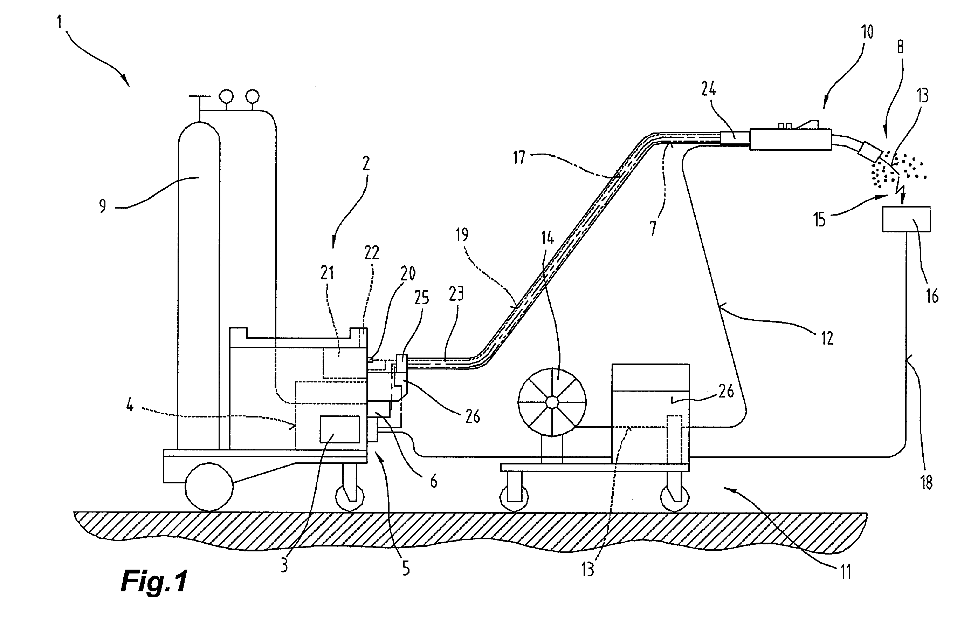

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist. Das Drahtvorschubgerät 11 kann auch für die Fassförderung ausgebildet sein. Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der Elektrode bzw. dem Schweißdraht 13 und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches bevorzugt aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. einen gebildeten Plasmastrahl für einen Prozess ein Stromkreis aufgebaut werden kann.

Zum Kühlen des Schweißbrenners 10 kann über einen Kühlkreislauf 19 der Schweißbrenner 10 beispielsweise unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 durch Förderung eines Kühlmediums bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben werden.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen. Hierzu ist es beispielsweise möglich, dass der Schweißbrenner 10 als lüftgekühlter Schweißbrenner 10 ausgeführt werden kann.

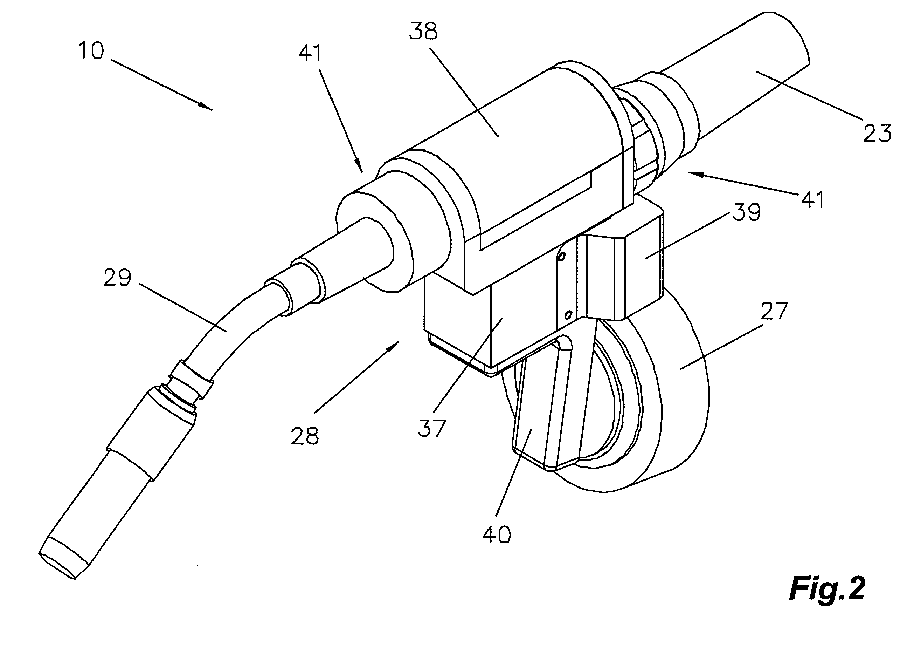

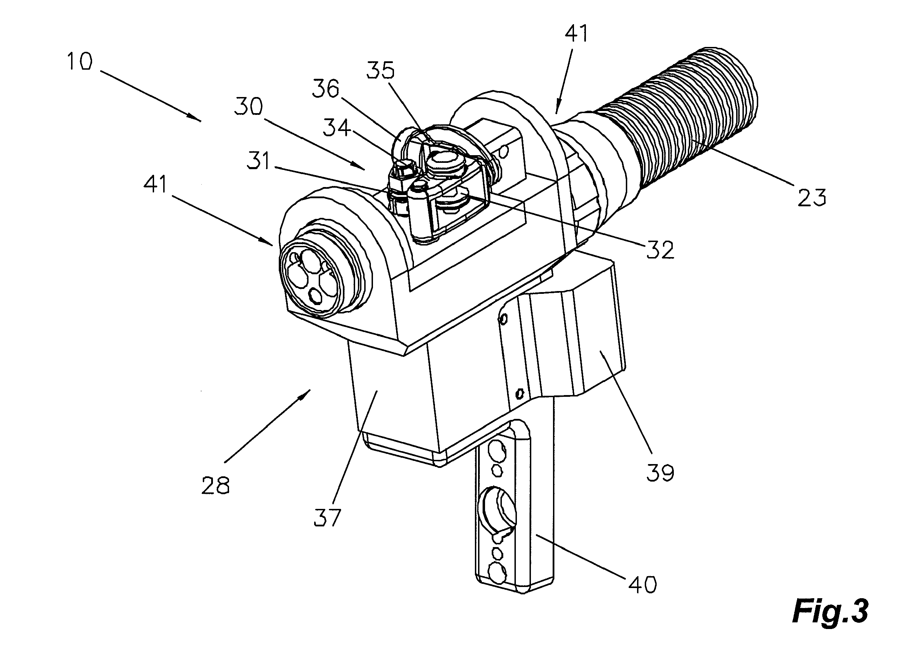

In den Fig. 2 bis 5 ist ein schematischer Aufbau eines Schweißbrenners 10 für eine Roboteranwendung dargestellt, wobei der Schweißbrenner 10 an einem Manipulator 27 eines Roboters, nicht dargestellt, befestigbar ist.

Der Schweißbrenner 10 weist zumindest ein Brennergehäuse 28 und bevorzugt einen daran befestigbaren Rohrbogen 29 auf, wobei im Brennergehäuse 28 eine Antriebseinheit 30 zur Förderung des Schweißdrahtes 13 angeordnet ist. Dabei ist die Antriebseinheit 30 aus zumindest einem Rollenpaar, insbesondere einer Antriebsrolle 31 und einer Druckrolle 32, und einem Antriebsmotor 33 gebildet. Um eine optimale Schweißdrahtförderung zu erreichen, ist es notwendig, dass über die Rollen, insbesondere die Druckrolle 32, eine definierte Druckkraft auf den Schweißdraht 13 aufgebaut wird. Dies kann beispielsweise derart erfolgen, dass die Druckrolle 32 über einen Schwenkhebel 34 beweglich gelagert ist, wobei der Schwenkhebel 34 über einen Spannhebel 35 fixiert wird. Die Spannkraft des Spannhebels 35 wird in einfacher Form durch eine Einstellvorrichtung 36, insbesondere eine Schraube, verändert, wobei der Spannhebel 35 den Schwenkhebel 34 mit der Druckrolle 32 in Richtung der Antriebsrolle 31 drückt. Damit wird nunmehr erreicht, dass die Druckrolle 32 über den drehbar gelagerten Schwenkhebel 34 gegen die Antriebsrolle 31 gepresst wird, sodass eine entsprechende Kraft beim Durchführen des Schweißdrahtes 13 auf diesen über die Antriebsrolle 31 und der Druckrolle 32 aufgebaut wird.

Bevorzugt ist das Brennergehäuse 28 aus mehreren Teilen, wie beispielsweise einem Grundkörper 37, einem Abdeckteil 38, einem Steuerelektronikteil 39, einer Brenneraufnahme 40 usw. gebildet. Weiters sind am Schweißbrenner 10 Kupplungsvorrichtungen 41 angeordnet, an denen der Rohrbogen 29 und das Schlauchpaket 23 angekoppelt werden können. Auf eine detaillierte Darstellung des Innenaufbaus für die Verlegung von Leitungen 42 und/oder Rohren zur Förderung der Medien, insbesondere der Kühlleitungen und der Gasversorgungsleitung und einer Leitung für die Schweißstromversorgung, usw., zwischen den Kupplungsvorrichtungen 41 wird übersichtshalber verzichtet, sodass entsprechende Befestigungsstellen und/oder Führungen nicht dargestellt wurden.

Bei dem Schweißbrenner 10 ist vorgesehen, dass ein Teil des Brennergehäuses 28 als Bestandteil der Antriebseinheit 33 ausgebildet ist, wobei ein Lager 43, 44 für die Lagerung des Rotors 45, insbesondere einer Motorwelle bzw. Motorwelle 46, am Brennergehäuse 28 zur Stabilisierung und Positionierung des Rotors 45 befestigt ist. Üblicherweise ist aus dem Stand der Technik der Antriebsmotor 33 als eigene Baueinheit, also mit einem eigenen Statorgehäuse, an dem die Lager 43, 44 für die Lagerung des Rotors 45 befestigt sind, aufgebaut, wobei der Antriebsmotor 33 aus dem Stand der Technik lediglich in das Brennergehäuse 28 als gesamte Einheit eingebaut bzw. befestigt wird.

Durch die Integration der Antriebseinheit 30, insbesondere des Antriebsmotors 33, in das Brennergehäuse 28, insbesondere in den Grundkörper 37, wird erreicht, dass die Baugröße und das Gewicht des Schweißbrenners 10 wesentlich reduziert wird, wobei das Brennergehäuse 28 für die Stabilität des Antriebsmotors 33 verwendet wird, d.h., dass die bei einem Betrieb des Antriebsmotors 33 auftretenden Biegemomente und Lagerkräfte vom Brennergehäuse 28 aufgenommen werden, wogegen beim Stand der Technik diese auf das Statorgehäuse, über das beim Stand der Technik der Antriebsmotor 33 am Brennergehäuse 28 befestigt ist, übertragen werden, sodass ein relativ stabiles Statorgehäuse notwendig ist. Bei dem Aufbau bildet das Brennergehäuse 28 oder ein Teil des Brennergehäuses 28 das Statorgehäuse aus, wobei je nach Bauart der Antriebseinheit 30 ein Wicklungspaket, insbesondere die Statorwicklung 47 des Antriebsmotors 33, direkt in das Brennergehäuse 28, insbesondere im Grundkörper 37, eingebaut, insbesondere eingepresst, geklebt oder geschrumpft ist. Dabei ist es auch möglich, dass direkt im Brennergehäuse 28, insbesondere im Grundkörper 37, Magnete, insbesondere die Statormagnete, eingepresst bzw. eingebaut sind, wenn ein entsprechender Antriebsmotor 33 mit einem derartigen Aufbau verwendet wird. Bevorzugt wird dabei der Grundkörper 37 aus einem Teil gebildet. Im Grundkörper 37 wird für die Integration des Statorpaketes ein entsprechender Freiraum bzw. Öffnung 48 geschaffen, in dem die Statorwicklung 37 oder die Statormagnete eingepresst bzw. eingebaut werden.

Weiters ist direkt mit dem Brennergehäuse 28, insbesondere mit dem Grundkörper 37, mindestens ein Lager 43, 44, bevorzugt jedoch zwei Lager 43, 44, für den Rotor 45 des Antriebsmotors 33 verbunden, wobei der Rotor 45 als Motorwelle 46 mit einem Rotorpaket, insbesondere einer Rotorwicklung 49 oder einem Rotormagneten, ausgebildet ist, sodass die Motorwelle 46 über die Lager 43, 44 am Grundkörper 37 drehbar gelagert und das Rotorpaket innerhalb des Statorpaketes, insbesondere der Statorwicklung 47 oder Statormagnete, angeordnet ist. Zur Befestigung des Lagers 43, 44 wird bevorzugt ein Zwischenstück 50 bzw. Lagerschild eingesetzt, wobei an dem Brennergehäuse 28, insbesondere an dem Grundkörper 37, das Zwischenstück 50 mit dem darin integrierten Lager 43 befestigt ist. Hierbei ist es möglich, dass zur elektrischen Isolierung auf dem Zwischenstück 50 eine Isolierplatte 51 angeordnet ist. Selbstverständlich ist es auch möglich, dass das Zwischenstück 50 aus einem elektrisch nicht leitenden Material gebildet ist und das Lager 43, 44 in das Zwischenstück 50 eingebettet ist, sodass eine entsprechende Isolierebene gebildet wird.

Bei dem dargestellten Ausführungsbeispiel der Fig. 2 bis 5 ist die Öffnung 48 für das Statorpaket derart ausgebildet, dass dieses etwa den gleichen Durchmesser wie das Statorpaket, also die Statorwicklung 47, aufweist, wobei sich die Öffnung 48 über den gesamten Grundkörper 37 hindurch erstreckt. Damit ist es möglich, dass eine beidseitige Montage der Teile des Antriebsmotors 33 erfolgen kann. Im Endbereich der Öffnung 48 werden anschließend die Zwischenstücke 50 mit den Lagern 43, 44 montiert. Hierzu wird nach der Montage der Statorwicklung 47 der Rotor 45 in die Öffnung 48, also in den Stator eingesetzt, sodass anschließend die Lager 43, 44 auf der Motorwelle 46 befestigt werden und diese über das Zwischenstück 50 am Grundkörper 37 befestigt werden, sodass eine Stabilisierung und Positionierung des Rotors 45 im Zentrum des Statorpaketes erfolgt. Damit ist die Funktionalität eines handelsüblichen Antriebsmotors 33 gegeben, wobei sich wesentliche Vorteile durch die Integration in das Gehäuse des Schweißbrenners 10 ergeben.

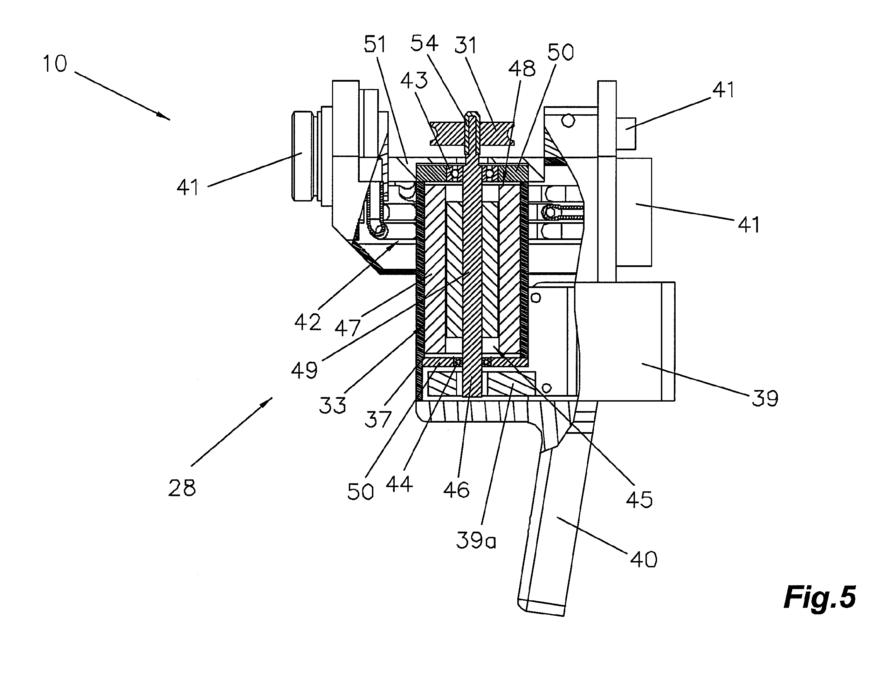

Um eine Förderung des Schweißdrahtes 13 zu ermöglichen, wird anschließend die Antriebsrolle 31 bevorzugt direkt mit der Motorwelle 46 verbunden, wie schematisch in Fig. 5 dargestellt wurde, und es kann die Druckrolle 32, die am Schwenkhebel 34 befestigt ist, montiert werden. Der Schweißdraht 13 kann mit der Antriebseinheit 30 entsprechend der Drehrichtung der Antriebsrolle 31 gefördert werden. Bei dem dargestellten Ausführungsbeispiel wird dabei der Schweißdraht 13 unabhängig vom Schlauchpaket 23 über einen eigenen Schweißdrahtförderschlauch, nicht dargestellt, zugeführt, der über eine weitere Kupplungsvorrichtung 41, insbesondere einen Schnellverschluss, am Schweißbrenner 10 angekoppelt wird. Die Verbindung der Antriebsrolle 31 mit dem Antriebsmotor 33 kann derart erfolgen, dass direkt an der Motorwelle 46, wie in Fig. 5 dargestellt, die Antriebsrolle 31 befestigt ist oder die Motorwelle 46 mit einem Getriebe, nicht dargestellt, verbunden ist und die Antriebsrolle 31 an das Getriebe gekoppelt ist. Beim Einsatz eines Getriebes kann die Förderkraft wesentlich verstärkt werden. Die Isolierplatte 51 und/oder das Zwischenstück 50 können in diesem Fall an der Stirnfläche des Getriebes angeordnet sein oder einfach entfallen.

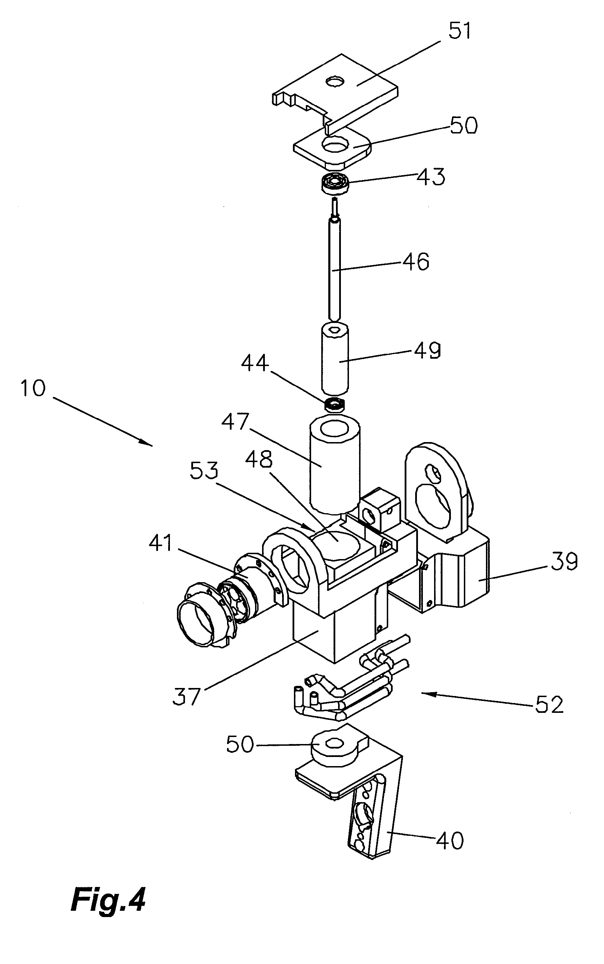

Um eine optimale Kühlung des Antriebsmotors 33 zu erreichen, ist es möglich, dass das Brennergehäuse 28, insbesondere der Grundkörper 27, als Kühlkörper ausgebildet, d.h., dass das Brennergehäuse 28 oder ein Teil davon, insbesondere der Grundkörper 37, aus einem wärmeleitenden Material, insbesondere aus Aluminium, gebildet ist, sodass eine sehr gute Ableitung der von der elektrischen Antriebseinheit 30 erzeugten Wärme möglich ist. Hierzu ist es auch möglich, dass im Bereich des Antriebmotors 33, also des Statorpaketes, das Brennergehäuse 28 bzw. der Grundkörper 37 Kühlkanäle, nicht dargestellt, aufweist, d.h., dass direkt im Material des Grundkörpers 37 Kühlkanäle eingearbeitet sind. Es ist auch möglich, dass zusätzlich oder anstelle der Kühlkanäle Kühlleitungen 52, wie in Fig. 4 schematisch angedeutet, angeordnet sind. Bevorzugt sind die Kühlkanäle und/oder die Kühlleitungen 52 über Leitungen mit einem Kühlkreislauf verbunden, sodass eine Kühlflüssigkeit bzw. ein Kühlgas oder Luft durch die Kühlkanäle bzw. Kühlleitungen 52 gefördert werden kann und somit die Wärme abgeleitet werden kann. Selbstverständlich ist es auch möglich, dass die Kühlkanäle bzw. die Kühlleitungen 52 mit der Gasversorgung des Schweißbrenners 10 gekoppelt werden können, sodass das Gas 8, insbesondere das Schutzgas, gleichzeitig für die Kühlung der Antriebseinheit 30 und zum Aufbau einer Schutzgas-Atmosphäre an der Schweißstelle verwendet wird. Durch den Einsatz von Kühlkanälen und/oder Kühlleitungen ist es auch möglich, dass das Brennergehäuse 28 bzw. der Grundkörper 37 aus einem schlecht wärmeleitenden Material, wie beispielsweise Kunststoff, aufgebaut werden kann und bei entsprechender Dimensionierung der Kühlkanäle bzw. Kühlleitungen genügend Wärme über das Kühlmedium abgeführt werden muss.

Bei der Ausbildung des Brennergehäuses 28, insbesondere des Grundkörpers 37, als Kühlkörper ist eine gute Luftkühlung wichtig, d. h., dass eine sehr große Oberfläche für die Luftkühlung geschaffen werden soll. Hierzu ist es möglich, dass das Brennergehäuse 28 bzw. der Grundkörper 37 an der Außenseite Kühlrippen 53, wie schematisch in Fig. 4 angedeutet, aufweist, um eine noch größere Oberfläche zu schaffen. Selbstverständlich ist es möglich, dass das Brennergehäuse 28 bzw. der Grundkörper 37 aus einem gut wärmeleitenden Material für eine Luftkühlung gebildet wird und gleichzeitig jedoch Kühlkanäle bzw. Kühlleitungen 52 für eine Flüssigkeitskühlung eingesetzt werden. Damit kann der Schweißbrenner 10 für sehr hohe Leistungen, insbesondere hohe Schweißströme, verwendet werden und trotzdem die Baugröße und das Gewicht gering gehalten werden, da eine sehr gute Kühlung möglich ist. Sollte jedoch ein Schweißbrenner 10 mit möglichst wenig Gewicht aufgebaut werden, so kann das Brennergehäuse 28 bzw. ein Teil davon aus Kunststoff gebildet werden, da über ein entsprechendes Kühlsystem die Verlustwärme abgeleitet wird.

Um den Antriebsmotor 33 bezüglich Drehzahl, Leistung und/oder Drehmoment zu steuern, kann im Brennergehäuse 28 eine Sensor- bzw. Steuerelektronik, nicht dargestellt, zur Steuerung und Regelung des Antriebsmotors 33 verwendet werden. Bei diesem dargestellten Ausführungsbeispiel ist ein eigenständiges Sensor- bzw. Steuerelektronikteil 39 mit dem Grundköper 37 verbunden. Die Steuerelektronik ist speziell in dem lösbar verbundenen Steuerelektronikteil 39 angeordnet, sodass ausreichend Platz vorhanden ist. Es ist natürlich möglich, dass die Steuerelektronik nicht in einem zusätzlichen Steuerelektronikteil 39 untergebracht wird, sondern direkt im Grundkörper 37, beispielsweise neben dem Antriebsmotor 33 integriert wird. Auf die Ausbildung und Funktion der Steuerelektronik wird nicht näher eingegangen, da hierzu jeder aus dem Stand der Technik bekannte Aufbau eingesetzt werden kann, wobei je nach Art des Antriebsmotors 33 verschiedenste Steuerelektroniken eingesetzt werden können. Durch die separate Anordnung in einem eigenen Steuerelektronikteil 39 ist es auch einfach möglich, die Steuerelektronik zu wechseln. Beispielsweise ist es möglich, dass der im Grundkörper 37 integrierte Antriebsmotor 33 als Synchronmotor oder Gleichstrommotor oder Schrittmotor ausgebildet ist. Durch den Einsatz eines zusätzlichen an den Grundkörper 37 kuppelbaren Steuerelektronikteils 39 ist es möglich, dass genügend Platz für die unterschiedlichen Steuerelektroniken vorhanden ist, sodass auch ein Umbau des Schweißbrenners 10 möglich ist bzw. dass bei Einsatz von mehr Steuerelektronik ein dementsprechend größeres Steuerelektronikteil 39 verwendet wird, ohne dass, wie dies oft bei den Schweißbrennern 10 aus dem Stand der Technik der Fall ist, der gesamte Schweißbrenner 10 getauscht werden muss, um eine andere Steuerelektronik einsetzen zu können. Es ist auch möglich, dass die Steuerelektronik für den Antriebsmotor 33 extern, insbesondere im Schweißgerät 1 oder einer Drahtfördervorrichtung 11 usw., angeordnet ist, die anschließend über Leitungen mit dem Antriebsmotor 33 verbunden wird, sodass der Steuerelektronikteil 39 entfallen kann. Selbstverständlich wäre es auch möglich, dass die Steuerung oder Regelung direkt von der Steuervorrichtung 4 des Schweißgerätes 1 oder einer anderen Steuervorrichtung einer anderen Komponente erfolgt, sodass keine zusätzliche Steuerelektronik für den Antriebsmotor 33 im Schweißbrenner 10 benötigt wird.

Weiters kann zur besseren Regelung oder Steuerung ein Drehgeber 39a, insbesondere ein Encoder, mit dem Rotor 45 oder der Antriebsrolle 31 verbunden werden. Als Drehgeber kann wiederum jeder aus dem Stand der Technik bekannte Drehgeber, z.B. ein inkrementaler Encoder, eingesetzt werden. Vorteilhaft ist weiters, dass die einzelnen Teile der Antriebseinheit 30 zur Erkennung der Kenndaten des Antriebsmotors 33 einen Speicherbaustein, wie beispielsweise einen Transponder, aufweisen können und somit eine automatische Erkennung erfolgen kann, sodass vom Schweißgerät 1 bzw. der Steuerelektronik die entsprechenden Programme und/oder Daten für die eingesetzte Antriebseinheit 30 geladen bzw. verwendet werden können.

Um die Sicherheit der Bauteile der Steuerelektronik sowie der anderen Teile des Antriebsmotors 33 und die Zuverlässigkeit des Schweißbrenners 10 zu gewährleisten, ist es vorteilhaft, wenn eine Isolierung zwischen Antriebsrolle 31 und Grundkörper 37 angeordnet ist, da die Übertragung des Schweißstromes auf den Schweißdraht üblicherweise über ein Kontaktrohr im Endbereich des Rohrbogens 29 erfolgt, wodurch das Schweißspannungspotential über den Schweißdraht 13 zu der Antriebsrolle 31 und somit zu dem Antriebsmotor 33 geleitet wird. Der hohe resultierende Schweißstrom bei einem Kurzschluss würde zu Zerstörungen einzelner Brennerkomponenten oder des gesamten Brenners führen, was durch die Anbringung einer Isolierung verhindert werden kann. Hierzu ist die Isolierung bevorzugt als Isolierschicht 54 aus einem elektrisch nichtleitenden Material ausgebildet, die zwischen Antriebsrolle 31 und Motorwelle 46 und/oder Motorwelle 46 und Rotorpaket und/oder Motorwelle 46 und Lager 43, 44 und/oder Rotorpaket und Stator und/oder Stator und Brennergehäuse 28 ausgebildet ist. Eine detaillierte Darstellung spezieller Isolieranordnungen wird noch in späteren Figuren gezeigt und beschrieben. Es ist auch möglich, dass die Antriebsrolle 31 und/oder Motorwelle 46 aus elektrisch nichtleitendem Material oder Teilen von elektrisch nichtleitendem Material besteht.

Bei dem gezeigten Ausführungsbeispiel der Fig. 2 bis 5 ist die Isolierschicht 54 über einen Teilbereich, insbesondere im Endbereich, auf der Motorwelle 46 aufgebracht, wobei in diesem Bereich der Isolierschicht 54 die Antriebsrolle 31 montiert wird. Somit wird eine Isolierung zwischen der Antriebsrolle 31 und dem Antriebsmotor 33, also zwischen Motorwelle 46 und Antriebsrolle 31, erzielt, wodurch verhindert wird, dass der Schweißstrom auf das Rotorpaket übertragen wird, sodass die restlichen Bauelemente ebenfalls vor dem Schweißstrom geschützt sind. Die Isolierschicht 54 kann beispielsweise aus Kunststoff oder Keramik gebildet sein. Es ist auch möglich, dass die gesamte Antriebsrolle 31 aus einem nicht elektrisch leitenden Material besteht, wodurch wiederum keine Stromübertragung auf die Motorwelle 46 stattfinden kann. Selbstverständlich ist es auch möglich, dass die Motorwelle 46 zweiteilig ausgebildet ist, wobei die beiden Teile durch eine isolierende Kupplung elektrisch voneinander getrennt verbunden sind.

Weiters ist es möglich, dass der Schweißbrenner 10 noch spezielle Ausbildungen aufweisen kann. Dabei ist es möglich, dass beispielsweise das Brennergehäuse 28 oder ein Teil davon, insbesondere der Grundkörper 37, als stromführender Teil, insbesondere zur Übertragung des Schweißstromes, ausgebildet ist, d.h., dass der Schweißstrom, der über das Schlauchpaket 23 zugeführt wird, über das elektrisch leitende Material bzw. Brennergehäuse 28 zum Rohrbogen 29 bzw. einem Anschlusselement für den Rohrbogen 29 geleitet wird. Somit kann das Stromkabel bzw. das Stromübertragungselement im Brennergehäuse 28 zwischen den beiden Kupplungsvorrichtungen 41 entfallen. Dabei ist es jedoch auch notwendig, dass das Gehäuseteil, über welches der Schweißstrom geführt wird, nach außen vor Berührung geschützt ist. Dies kann beispielsweise derart erfolgen, dass über das Brennergehäuse 28 oder über den stromführenden Teil eine Isolierschicht oder eine elektrisch nichtleitende Abdeckhaube, nicht dargestellt, aufgebracht ist. Bevorzugt wird auch zwischen der Brenneraufnahme 40, insbesondere dem Ansatzteil, und dem Brennergehäuse 28, insbesondere dem Grundkörper 37, eine Isolierschicht, nicht dargestellt, angeordnet, damit auf keinen Fall ein Kurzschluss über den Roboter, insbesondere den Manipulator 27, entstehen kann. Hierzu ist es möglich, dass die Brenneraufnahme 40 bzw. der Ansatzteil aus einem nicht elektrisch leitenden Material gebildet ist, wobei dabei darauf zu achten ist, dass die Brenneraufnahme 27 möglichst steif ausgeführt ist, damit der Schweißbrenner 10 immer in der gleichen Position bleibt.

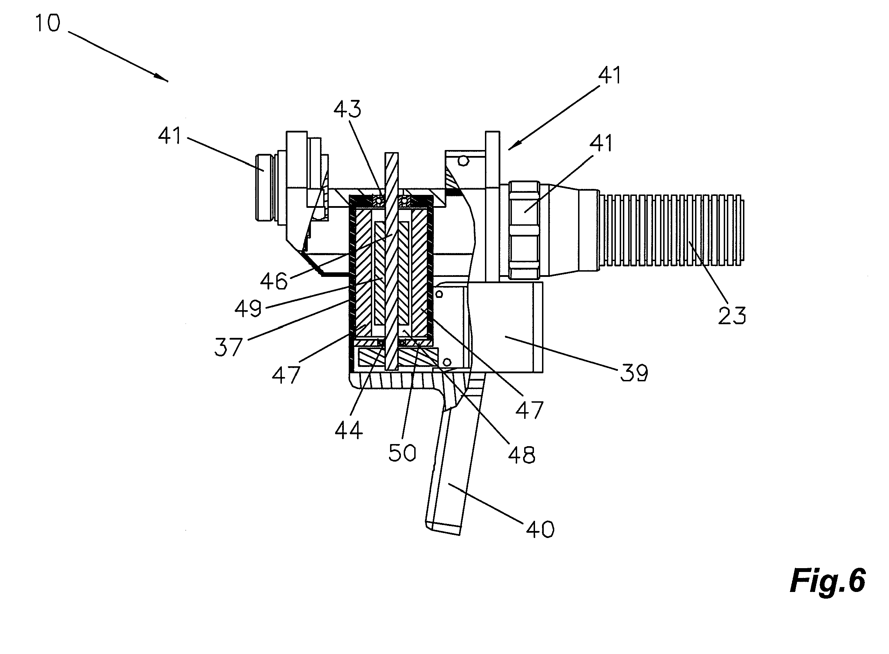

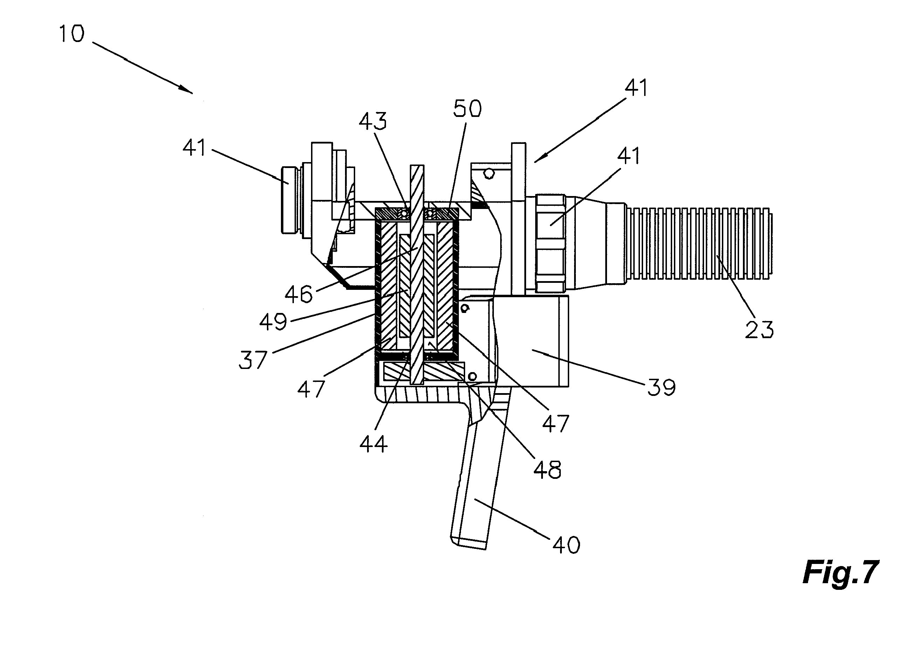

In den Fig. 6 und 7 sind zwei weitere Ausführungsbeispiele des Schweißbrenners 10 dargestellt. Der Unterschied zu dem Aufbau der Fig. 2 bis 5 liegt darin, dass nunmehr die Öffnung 48 im Grundkörper 37 nicht mehr im vollen Umfang durch den Grundkörper 37 hindurch geht, sondern auf einer Seite geschlossen ist, d.h., dass im Grundkörper 37 auf einer Seite der Öffnung 38 nur mehr eine Lagerungsbohrung oder ein Wellendurchgang angeordnet ist, an welchen das Lager 43 oder 44 direkt in den Grundkörper 37 montiert wird, wogegen die gegenüberliegende Seite der Öffnung 38 einen derart großen Durchmesser aufweist, dass der Stator, insbesondere die Statorwicklung 47 oder die Statormagnete, eingesetzt werden kann bzw. können. Damit wird erreicht, dass auf dieser Seite, wo das Lager 43, 44 direkt in den Grundkörper 37 montiert ist, auf ein zusätzliches Befestigungsmittel für die Lagerbefestigung, wie beispielsweise das Zwischenstück 50, verzichtet werden kann. Hierzu ist in Fig. 6 der Aufbau so gewählt, dass das der Antriebsrolle 31 nächstliegende Lager 43 direkt im Grundkörper 37 eingebettet ist, wogegen im Aufbau von Fig. 7 das Lager 44, also das weiter zur Antriebsrolle 31 entfernte Lager 44, im Grundkörper 37 angeordnet ist. Bei diesem Aufbau der Fig. 6 und 7 ist nunmehr die Montage der einzelnen Teile des Antriebsmotors 33 nur mehr von einer Seite möglich, wobei jedoch die Stabilität bzw. Steifigkeit des Brennergehäuses 28, insbesondere des Grundkörpers 37, verbessert wird.

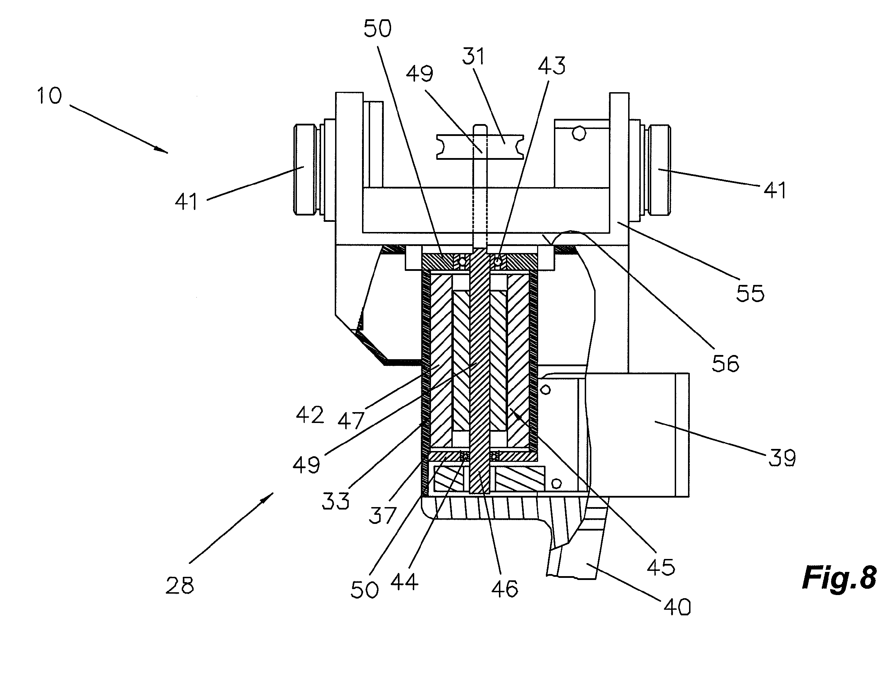

Gemäß dem Ausführungsbeispiel in Fig. 8 ist im Brennergehäuse 28 ein Montageelement 55 angebaut, an dem die benötigten Teile oder Führungen angebracht sind. Auf das Montageelement 55 wird beispielsweise das Abdeckteil 38 aufgesetzt, sodass ein Schutz vor Verschmutzung und Berührung der Teile gegeben ist. Der Schweißbrenner 10 ist dabei derart aufgebaut, dass der Antriebsmotor 33 im Grundkörper 37 integriert ist und der Grundkörper 37 auf jener Seite, wo die Motorwelle 46 zum Verbinden mit der Antriebsrolle 31 oder einem Getriebe vom Grundkörper 37 herausragt, die Montageebene 56 aufweist, an der das Montageelement 55 befestigt wird. Die Ausbildung der Montageebene 56 kann dabei beliebig gewählt werden. Beispielsweise kann diese durch eine ebene Fläche, wie dargestellt, erfolgen, sodass auf diese Montageebene 56 eine einfache Montageplatte bzw. das Montageelement 55 montiert werden kann. Selbstverständlich ist es auch möglich, dass die Montageebene 56 eine spezielle Kontur aufweist, auf der dann anschließend ein entsprechend ausgebildetes Montagelement 55 aufgesetzt wird.

Bei einer derartigen Ausbildung des Schweißbrenners 10 wird erreicht, dass auf dem Montageelement 55 sämtliche Teile bzw. Elemente, wie beispielsweise die Kupplungsvorrichtungen 41 für den Rohrbogen 29 und das Schlauchpaket 23, die Leitungen 42 zum Verbinden der beiden Kupplungsvorrichtungen 41, sowie die Lagerung der Druckrolle 32, unabhängig vom Grundkörper 37 aufgebaut bzw. montiert werden können. Im Grundkörper 37 werden hingegen die Teile für den Antriebsmotor 33 montiert. Anschließend müssen die beiden Teile, also der Grundkörper 37 und das Montageelement 55, lediglich miteinander verbunden werden, um einen funktionsfähigen Schweißbrenner 10 zu erhalten.

Damit wird in vorteilhafter Weise erreicht, dass eine sehr einfache und schnelle Montage des Schweißbrenners 10 erzielt wird. Ein weiterer Vorteil liegt darin, dass ein standardisierter Aufbau des Grundkörpers 37 mit dem Antriebsmotor 33 verwendet wird, auf dem anschließend unterschiedliche Aufbauten unterschiedlicher Ausführungen des Schweißbrenners 10 montiert werden können, sodass keine unterschiedlichen kompletten Brennergehäuse 28 für die verschiedensten Schweißbrennertypen mehr benötigt werden. Somit können erhebliche Kosteneinsparungen erzielt werden, da der Aufbau des Schweißbrenners 10 immer auf den standardisierten Grundkörper 37 erfolgt und lediglich das Montageelement 55 für die verschiedensten Schweißbrennertypen unterschiedlich aufgebaut werden muss.

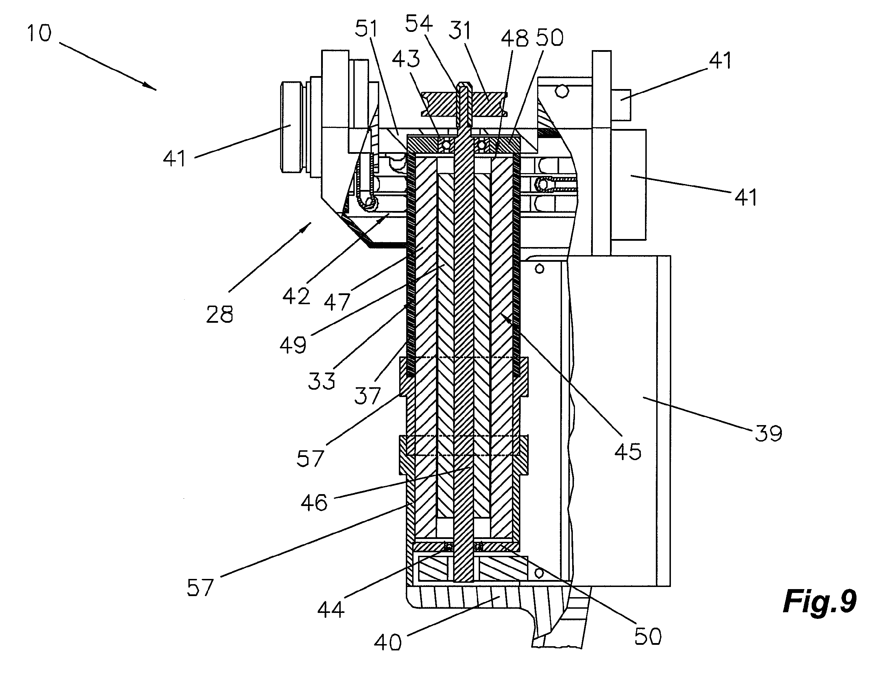

In den Fig. 9 bis 11 ist eine Ausführungsvariante dargestellt, bei dem der Schweißbrenner 10 modular erweiterbar ist bzw. die Leistung des Antriebsmotors 33 in einfacher Form angepasst werden kann.

Hierzu ist der Antriebsmotor 33, insbesondere die Statorwicklung 47 oder die Statormagneten und/oder Rotorwicklung 49 oder Rotormagneten, durch zusätzliche Module 57 erweiterbar, insbesondere um die Leistung und das Ansprechverhalten des Antriebsmotors 33 anzupassen. Dies geschieht beispielsweise derartig, dass, wie in Fig. 9 ersichtlich, lediglich ein oder mehrere Module 57 an den Grundkörper 37 angekoppelt werden, sodass anschließend eine entsprechend längere Statorwicklung 47 und ein entsprechender Rotor 45 eingebaut werden können. Somit wird in vorteilhafter Weise erreicht, dass für unterschiedlichste Leistungen des Antriebsmotors 33 immer das gleiche Brennergehäuse 28 bzw. der gleiche Grundkörper 37 verwendet wird, wobei durch Erweiterung des Grundkörpers 37 mit den Modulen 57 ein entsprechend größerer bzw. leistungsstärkerer Antriebsmotor 33 eingebaut werden kann. Somit können die Kosten des Schweißbrenners 10 gering gehalten werden, da immer das gleiche Brennergehäuse 28 verwendet werden kann und nicht für die unterschiedlichsten Antriebsmotoren 33 unterschiedliche Brennergehäuse 28 benötigt werden.

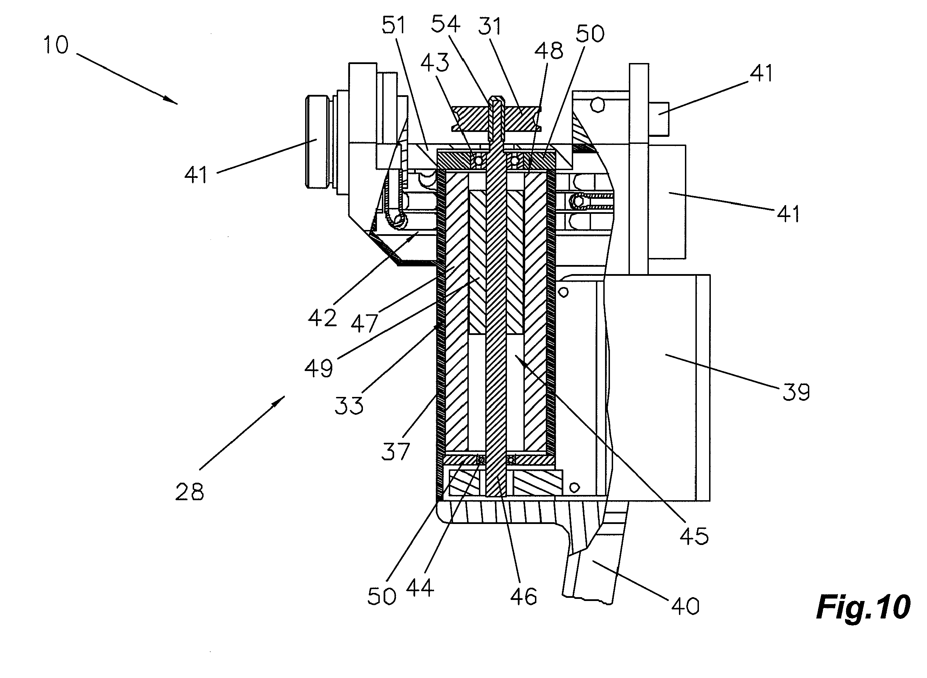

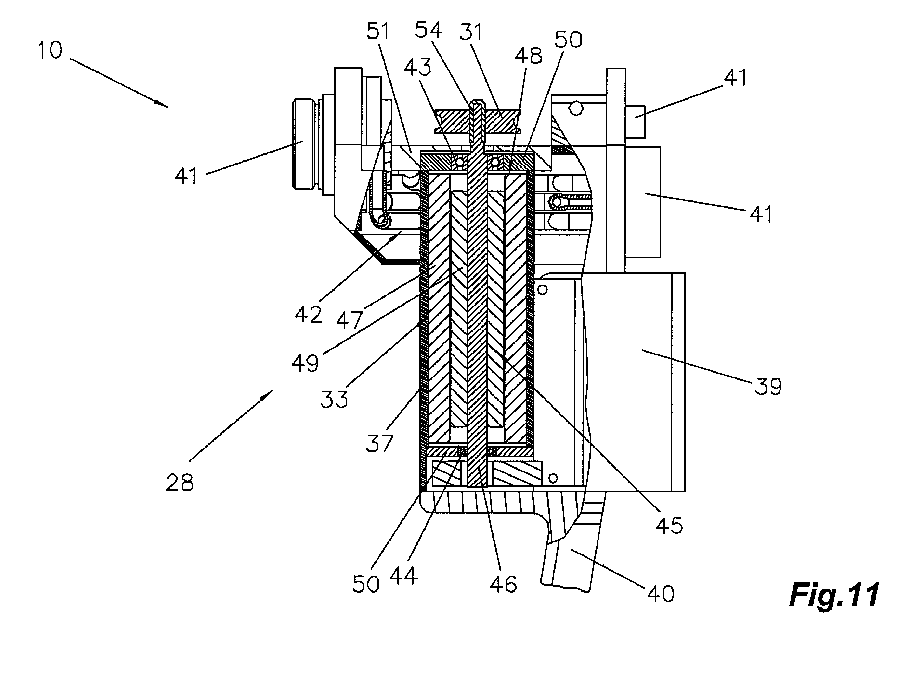

Eine spezielle Anpassung der Leistung bzw. des Ansprechverhaltens des Antriebsmotors 33 ist aus den Fig. 10 und 11 ersichtlich. Hierbei wird der Grundkörper 37 für eine entsprechende Statorwicklung 47 dimensioniert, wobei über den Rotor die Leistung bzw. das Ansprechverhalten des Antriebsmotors 33 bestimmt wird. Dies geschieht derartig, dass beispielsweise für ein sehr gutes Ansprechverhalten des Antriebsmotors 33 ein kleineres Rotorpaket, insbesondere eine kleine Rotorwicklung 49 eingesetzt wird, wie dies in Fig. 10 dargestellt ist. Damit reagiert der Antriebsmotor 33 sehr rasch auf eine vorgegebene Drehzahländerung oder Drehrichtungsumkehr. Wird jedoch eine höhere Leistung benötigt, so muss nunmehr lediglich der Rotor ausgewechselt werden und durch einen Rotor mit einem größeren Rotorpaket, insbesondere Rotorwicklung 49, eingesetzt werden, wie dies in Fig. 11 ersichtlich ist.

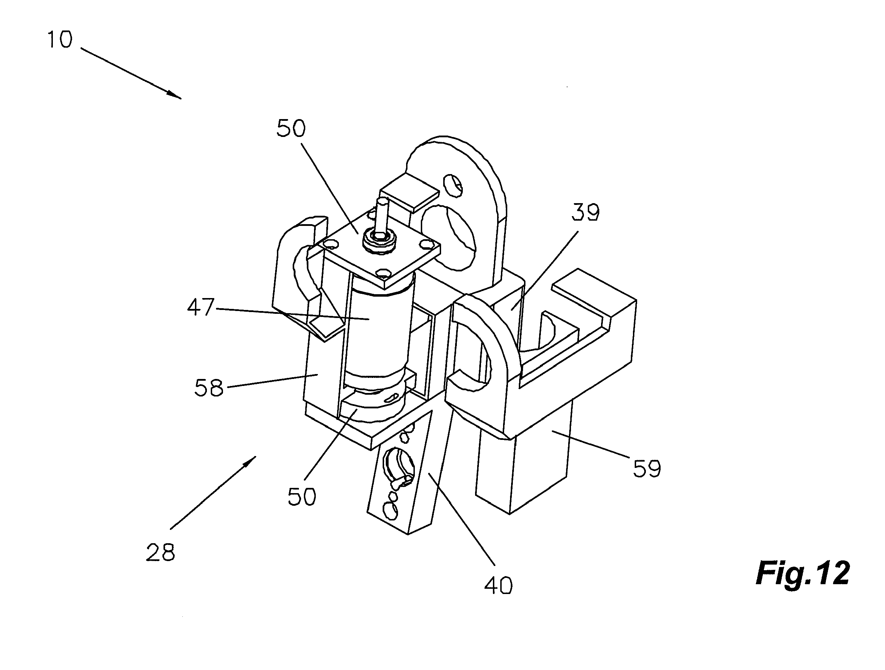

In Fig. 12 ist ein weiteres Ausführungsbeispiel für einen Aufbau zum Integrieren des Antriebsmotors 33 im Schweißbrenner 10, insbesondere in den Grundkörper 37, dargestellt. Hierbei ist nunmehr das Brennergehäuse 28 entlang einer Rotorachse geteilt, d.h., dass der Grundkörper 37 nunmehr aus zwei Halbschalen 58, 59 gebildet wird, in dem der Antriebsmotor 33 integriert wird. Durch diesen Aufbau wird erreicht, dass nunmehr eine sehr einfache Montage erzielt wird, da in einer Halbschale 58 oder 59 lediglich die Teile des Antriebsmotors 33 eingelegt werden müssen und anschließend durch Befestigen der zweiten Halbschale 59 oder 58 an der ersten Halbschale 58 oder 59 die Teile fixiert bzw. befestigt werden.

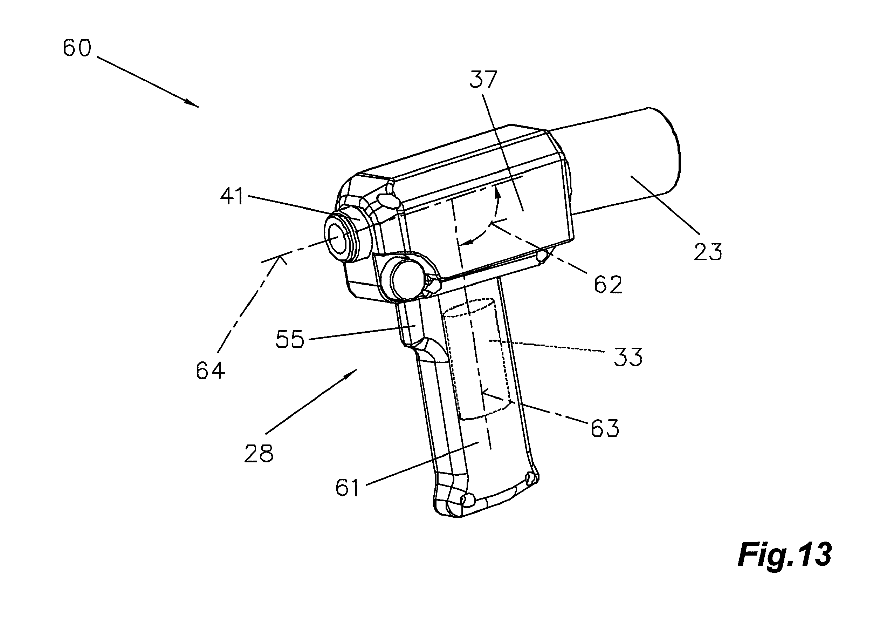

Weiters ist es auch möglich, dass der Aufbau mit der Integration des Antriebsmotors 33 in das Brennergehäuse 28 auch bei einem Handschweißbrenner 60 durchgeführt wird, wie dies schematisch in Fig. 13 dargestellt ist. Das Brennergehäuse 28 ist in Form eines Pistolen-Schweißbrenners ausgebildet, wobei im Bereich des Griffes 61 der Antriebsmotor 33 in das Brennergehäuse 28 eingebaut ist, wie dies strichliert schematisch dargestellt ist. Hierzu ist der Antriebsmotor 33, insbesondere die Motorwelle 46, wiederum in einem Winkel 62 von ca. 90° zum Schweißdraht 13 angeordnet, d.h., dass eine im Mittel der Motorwelle 46 verlaufende Rotorachse 63 zu einer im Mittel des Schweißdrahtes 13 verlaufenden Schweißdrahtförderachse 64 in dem Winkel 62 von 90° zueinander ausgerichtet sind. Eine derartige Ausrichtung des Antriebsmotors 33 zu dem Schweißdraht 13 ist auch in den vorhergehenden Fig. 1 bis 12 gegeben. Damit ist es wiederum möglich, dass die Antriebsrolle 31 direkt auf die Motorwelle 46 montiert wird und somit ein Direktantrieb für die Schweißdrahtförderung realisiert werden kann.

Es ist jedoch auch möglich, dass der Schweißbrenner 10, insbesondere der Handschweißbrenner 60, anders ausgebildet wird, bei dem nicht mehr, wie in den zuvor beschriebenen Fig. 1 bis 13, die Rotorachse 63 zur Schweißdrahtförderachse 64 in einem Winkel von 90° zueinander ausgerichtet ist, sondern die Ausrichtung der Rotorachse 63 zur Schweißdrahtförderachse 64 zentrisch bzw. parallel verläuft. Ein derartiges Ausführungsbeispiel wurde jedoch nicht dargestellt, da hierzu lediglich der Grundkörper 37 entsprechend ausgebildet werden muss, um den Antriebsmotor 33 darin zu integrieren. Dies kann beispielsweise bei einem Schweißbrenner 10 bzw. einem Handschweißbrenner 60 mit einem Planetarantrieb für die Schweißdrahtförderung verwendet werden, wobei hierzu die Motorwelle 46 axial zum Schweißdraht 13, insbesondere zu einer Schweißdrahtförderachse 64, angeordnet ist und der Schweißdraht 13 durch die Motorwelle 46, die hohl ausgebildet ist, verläuft. Es ist natürlich auch möglich, den Antriebsmotor 33 parallel und nicht in der Schweißdrahtachse anzuordnen und in den Grundkörper 37 zu integrieren.

Grundsätzlich ist zu erwähnen, dass in den zuvor gezeigten Ausführungsbeispielen der Fig. 1 bis 13 im Brennergehäuse 28 bzw. Grundkörper 37 zumindest ein oder mehrere Schaltelemente, nicht dargestellt, integriert sind, welche(s) zur Steuerung oder Regelung des Schweißprozesses diente(n), wie dies bereits aus dem Stand der Technik bekannt ist. Weiters ist es möglich, dass mehrere Antriebsmotoren 33 im Brennergehäuse 28 bzw. im Grundkörper 37 angeordnet sind, die wiederum im Brennergehäuse 28 integriert sind. Hierbei ist es auch möglich, dass nur ein Antriebsmotor 33 im Brennergehäuse 28 integriert ist und ein oder mehrere weitere Antriebsmotoren entsprechend dem Aufbau des Standes der Technik mit einem Statorgehäuse zusätzlich in das Brennergehäuse 28 eingebaut werden. Durch die Integration bzw. den Einsatz mehrerer Antriebsmotoren 33 kann somit ein Schweißbrenner 10 mit einem Mehrrollenantrieb aufgebaut werden. Es ist auch möglich, dass, wie aus dem Stand der Technik bekannt, nur eine Antriebsrolle 31 mit einem Antriebsmotor 33 eingesetzt wird, jedoch weitere Rollen entsprechend mit der Antriebsrolle 31 gekoppelt sind, d.h., dass beispielsweise durch den Einsatz von Zahnrädern eine entsprechende Koppelung der einzelnen Rollen durchgeführt wird, wodurch über den einen eingesetzten Antriebsmotor 31 eine entsprechende Kraftübertragung an alle bzw. einen Teil der Rollen durchgeführt wird.

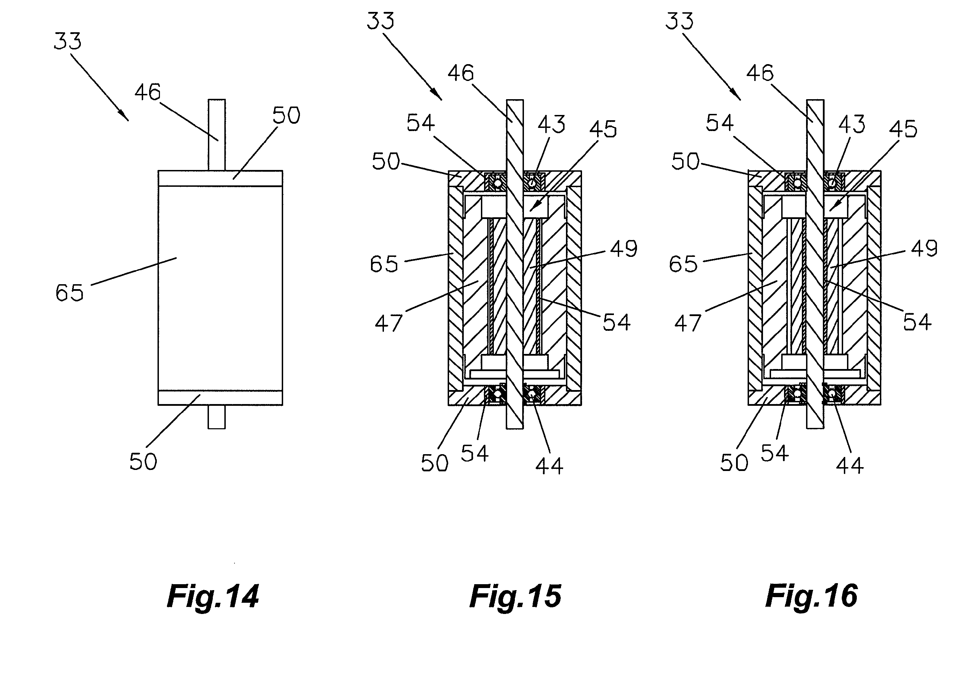

In den Fig. 14 bis 19 ist ein eigenständiger Antriebsmotor 33 in unterschiedlichen Aufbauvarianten dargestellt. Hierbei ist der Antriebsmotor 33 nunmehr als eigenständige Baueinheit, also mit einem Statorgehäuse 65, aufgebaut.

Dabei enthält der Antriebsmotor 33 das Statorgehäuse 65, an dessen Stirnseite jeweils ein Lagerschild bzw. ein Zwischenstück 50 mit einem darin integrierten Lager 43, 44 befestigt ist. Im Inneren des Statorgehäuses 65 ist das Statorpaket, insbesondere eine Statorwicklung 47, angeordnet. Weiters umfasst der Antriebsmotor 33 einen Rotor 45, der aus einer Motorwelle 46 mit einem darauf befestigten Rotorpaket, insbesondere einem Rotormagneten 49, gebildet ist. Der Rotor 45 wird im Zentrum des Statorpaketes bzw. des Statorgehäuses 65 angeordnet, sodass das Rotorpaket innerhalb des Statorpaketes angeordnet ist. Der Rotor 45 wird über die Lager 43, 44 drehbar gehalten.

Erfindungsgemäß ist nunmehr vorgesehen, dass der Antriebsmotor eine spezielle elektrische Isolierung aufweist, die in unterschiedlichen Bereichen des Antriebsmotors 33 angeordnet sein kann, wobei die elektrische Isolierung durch die Isolierschicht 54 gebildet ist. Speziell ist vorgesehen, dass zumindest ein Teil der Motorwelle 46, insbesondere der Aufnahmebereich der Antriebsrolle 31, von einem Gehäuse, insbesondere dem Statorgehäuse 65 oder dem Grundkörper 37 einer externen Komponente wie dem Schweißbrenner 10, elektrisch isoliert ist. Hierzu ist zu erwähnen, dass dieser Aufbau des erfindungsgemäßen Antriebsmotors 33 mit der Isolierschicht 54 auch bei den zuvor beschriebenen Ausführungsbeispielen der Fig. 1 bis 13 zum Einsatz kommen kann, wobei hierzu lediglich das Statorgehäuse 65 entfernt wird, sodass die restlichen Teile des Antriebsmotors 33 in das Brennergehäuse 28, insbesondere in den Grundkörper 37, eingebaut werden können. Durch die Anordnung der Isolierschicht 54 wird erreicht, dass ein elektrisches Potential an einem Teilbereich der Motorwelle 46 vom Statorgehäuse 65 oder Grundkörper 37 getrennt wird und somit kein Strom über Bauteile des Antriebsmotors 33 oder die Schnittstellen zu dem Schweißbrenner 10 fließen kann. Ein Vorteil liegt auch darin, dass beim Einsatz in der Schweißtechnik dadurch die Antriebsrolle 31 direkt an der Motorwelle 46, ohne zusätzlich anzuordnende Isolierung, montiert werden kann, was den Fertigungsaufwand und somit die Kosten reduziert.

Bei der in Fig. 15 dargestellten Ausführungsform ist die Isolierschicht 54 am Außenumfang des Rotorpaketes, insbesondere der Rotormagneten 49, angeordnet. Gleichzeitig sind die Lager 43, 44 gegenüber dem Statorgehäuse 65 ebenfalls mit einer entsprechenden Isolierschicht 54 isoliert. Wird nunmehr beispielsweise eine elektrisch leitende Antriebsrolle 31 direkt an der Motorwelle 46 befestigt, so kann sich zwar ein Stromfluss von der Antriebsrolle 31 über die Motorwelle 46 und die Rotormagneten 49 ausbreiten, jedoch wird dieser Stromfluss anschließend aufgrund der Isolierschichten 54 gestoppt, sodass ein Übergreifen auf die Statorwicklung 47 und das Statorgehäuse 65 verhindert wird. Der zwangsläufige oder ursprünglich vorhandene Luftspalt im Antriebsmotor 33 ist für eine den sicherheitstechnischen Anforderungen genügende Isolierung nicht ausreichend.

In Fig. 16 ist die Isolierschicht zwischen Motorwelle 46 und Rotorpaket, insbesondere den Rotormagneten 49, angeordnet, und zusätzlich sind die Lagerstellen, insbesondere die Lager 43, 44, isoliert ausgeführt, sodass nunmehr kein Stromfluss über die Motorwelle 46 zum Stator stattfinden kann.

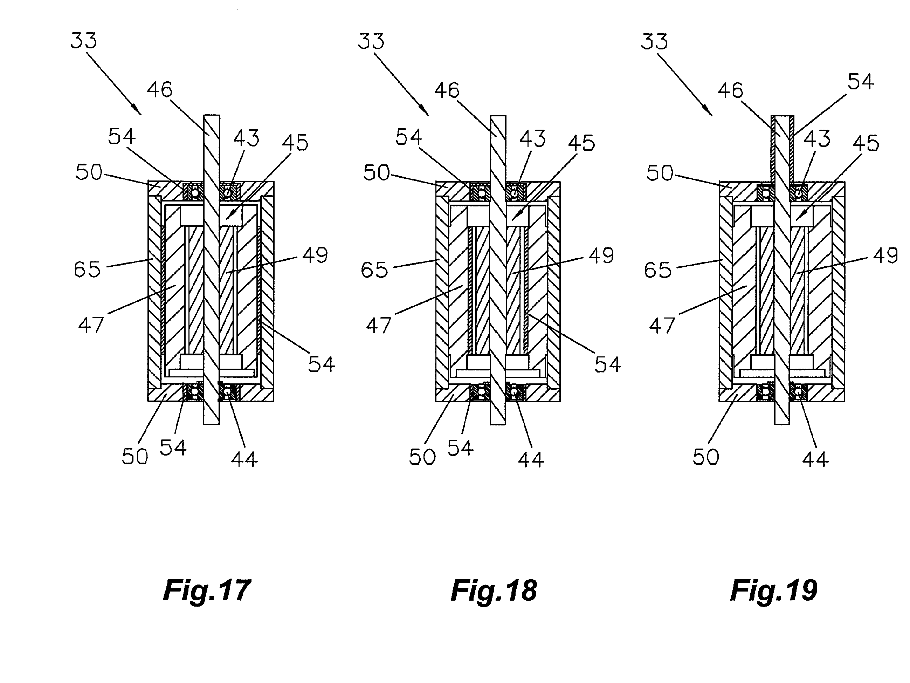

Gemäß der Ausbildung in Fig. 17 ist die Isolierschicht 54 zwischen dem Statorgehäuse 65 und dem Statorpaket, insbesondere dem Statorwicklungskörper, angeordnet, wobei hierzu wiederum die Lager 43, 44, gegenüber dem Statorgehäuse 65 elektrisch isoliert sind.

Aus Fig. 18 ist ersichtlich, dass die Isolierschicht an der Innenfläche der Statorwicklung, insbesondere an jener Seite, die dem Rotormagneten 49 zugewandt ist, angeordnet ist und zusätzlich die Lagerstelle, insbesondere die Lager 46, 47, isoliert ausgeführt ist bzw. sind.

Es ist aber auch möglich, gemäß Fig. 19, dass die Isolierschicht 54 nur über einen Teilbereich der Motorwelle 46, insbesondere im Endbereich der Antriebsrolle 31, aufgetragen bzw. angeordnet ist, d.h., dass in jenem Bereich, an dem ein stromführendes Teil anliegt bzw. befestigt ist, die Isolierschicht 54 angeordnet wird. Da bei einem Einsatz in der Schweißtechnik der Schweißdraht 13 mit Strom beaufschlagt wird, tritt ein Stromfluss über den Schweißdraht 13 zu der Antriebsrolle 31 auf. Wird nunmehr die Antriebsrolle 31 direkt auf die Motorwelle 46 montiert, so kann ein entsprechender Stromfluss von der Antriebsrolle 31 zur Motorwelle 46 stattfinden. Durch die Anordnung der Isolierschicht 54 im Montagebereich der Antriebsrolle 31 kann dies auf einfache Art und Weise verhindert werden. Bei dieser Lösung ist es auch nicht erforderlich, dass die Lagerung, insbesondere die Lager 43, 44, gegenüber dem Statorgehäuse 65 elektrisch isoliert werden muss bzw. müssen, da in keiner Weise ein Stromfluss auf den Antriebsmotor 31 einwirken kann.

Bei der Isolierung der Lager 43, 44, wie in den Fig. 14 bis 19 gezeigt, ist es möglich, dass die Lagerstelle, insbesondere das Lager 43 bzw. 44, in eine isolierende Hülse eingepresst ist. Es ist aber auch möglich, dass die Lagerstelle, insbesondere die Lager 43, 44, durch ein isolierendes Hybridlager gebildet wird bzw. werden, bei der Keramik-Wälzkörper eingesetzt werden oder ein Lagerring aus nicht elektrisch leitendem Material gebildet ist.

Selbstverständlich ist es auch möglich, dass die Motorwelle 46 aus einem elektrisch nicht leitenden Material, insbesondere aus Keramik, besteht, wodurch der gleiche elektrisch isolierende Effekt erzielt wird, jedoch die Isolierschichten 54 eingespart werden können.

## Patentansprüche

1. Antriebsmotor (33) zur Schweißdrahtförderung, mit Lagern (43, 44), einem Rotor (45), insbesondere einer Motorwelle (46) und einer Rotorwicklung (49) bzw. Rotormagneten, und einem Statorpaket, insbesondere einer Statorwicklung (47) oder Statormagneten, **dadurch gekennzeichnet, dass** zumindest ein Teil der Motorwelle (46), insbesondere der Aufnahmebereich einer Antriebsrolle (31), von dem Gehäuse, insbesondere einem Statorgehäuse (65) oder einem Grundkörper (37) einer externen Komponente, elektrisch isoliert ist.

2. Antriebsmotor (33) nach Anspruch 1, **dadurch gekennzeichnet, dass** die elektrische Isolierung durch eine Isolierschicht (54) gebildet ist.

3. Antriebsmotor (33) nach Anspruch 1 oder 2, **dadurch gekennzeichnet, dass** die Isolierschicht (54) zwischen dem Gehäuse und der Statorwicklung (47) angeordnet ist.

4. Antriebsmotor (33) nach Anspruch 1 oder 2, **dadurch gekennzeichnet, dass** die Isolierschicht (54) an der Innenfläche der Statorwicklung (46) angeordnet ist und zusätzlich die Lagerstelle isoliert ausgeführt ist.

5. Antriebsmotor (33) nach Anspruch 1 oder 2, **dadurch gekennzeichnet, dass** die Isolierschicht (54) zwischen Motorwelle (46) und Rotorpaket, insbesondere der Motorwelle (49), angeordnet ist und zusätzlich die Lagerstelle isoliert ausgeführt ist.

6. Antriebsmotor (33) nach Anspruch 1 oder 2, **dadurch gekennzeichnet, dass** die Motorwelle (46) aus einem elektrisch nicht leitenden Material, insbesondere aus Keramik, besteht.

7. Antriebsmotor (33) nach Anspruch 1 oder 2, **dadurch gekennzeichnet, dass** die Isolierschicht (54) über einen Teilbereich der Motorwelle (46), insbesondere im Endbereich, aufgetragen bzw. angeordnet ist.

8. Antriebsmotor (33) nach einem der Ansprüche 1 bis 6, **dadurch gekennzeichnet, dass** die Lagerstelle, insbesondere das Lager (43, 44), in eine isolierende Hülse eingepresst ist.

9. Antriebsmotor (33) nach einem der Ansprüche 1 bis 6, **dadurch gekennzeichnet, dass** die Lagerstelle durch ein isolierendes Hybridlager gebildet ist, bei dem Keramik-Wälzkörper eingesetzt sind oder ein Lagerring aus nicht elektrisch leitendem Material gebildet ist.

10. Antriebseinheit (30) für die Förderung eines Schweißdrahtes (13) mit einem Gehäuse bzw. Grundkörper (37), wobei im Gehäuse bzw. im Grundkörper (37) ein Antriebsmotor (33) zur Förderung des Schweißdrahtes (13) nach einem der Ansprüche 1 bis 9 angeordnet ist.
